# FASCICULE DE BREVET EUROPEEN

(11) **EP 0 807 093 B1**
(45) Date de publication et mention de la délivrance du brevet: **19.05.1999**
(21) Numéro de dépôt: 96902317.5
(22) Date de dépôt: 31.01.1996
(51) Int. Cl.: C04B 41/50, C25C 3/12

(54) **COMPOSITION POUR UN REVETEMENT DE PRODUITS CARBONES ET CE REVETEMENT**
ZUSAMMENSETZUNG FÜR EINE BESCHICHTUNG VON KOHLENSTOFFENTHALTENDEN PRODUKTEN UND SOLCHE BESCHICHTUNG
COATING COMPOSITION FOR A CARBONACEOUS MATERIAL, AND RESULTING COATING

(30) Priorité: 03.02.1995 FR 9501468
(43) Date de publication de la demande: 19.11.1997
(73) Titulaire: ALUMINIUM PECHINEY, 92400 Courbevoie (FR); Carbone Savoie, 73265 Aigueblanche Cedex (FR)
(72) Inventeur: LAURENT, Véronique, F-38340 Voreppe (FR); PAILLET, Denis, F-38260 La Frette (FR)
(74) Mandataire: Mougeot, Jean-Claude
(86) Numéro de dépôt international: FR9600164
(87) Numéro de publication internationale: WO9623745

(56) Documents cités:
- EP-A- 0 399 786
- EP-A- 0 489 667
- WO-A-88/01721
- WO-A-91/13840
- WO-A-93/13033
- FR-A- 2 659 963
- GEOPOLYMER '88 ,FIRST EUROPEAN CONFERENCE ON SOFT MINERALURGY, vol. 2, 1 - 3 Juin 1988, COMPIEGNE, FRANCE, pages 315-324, XP000566220 J.ORLINSKI: "Composites à matrices minérales de type géopolymère"

## Description

### DOMAINE TECHNIQUE DE L'INVENTION

L'invention concerne la protection contre l'oxydation de produits carbonés soumis à un milieu chaud et oxydant, dont la température ne dépasse pas 950°C. Ce sont par exemple les parties non immergées dans le bain de sel fondu des anodes et des dalles de bordure des cuves d'électrolyse de l'aluminium et plus généralement les parties non immergées d'éléments réfractaires carbonés utilisés dans une électrolyse s'effectuant à moins de 950°C en bain de sel fondu. L'électrolyse concernée par la présente invention est donc par exemple l'une de celles effectuées pour la fabrication de l'aluminium, du magnésium, du calcium, du strontium ou encore d'alliages tels que le fer-néodyme ou le lanthane-nickel. Il peut s'agir également de la protection des parties chaudes émergentes de la charge des électrodes en carbone ou en graphite des fours électriques utilisées notamment pour l'élaboration des aciers et des ferroalliages, dans la mesure où ces électrodes sont longtemps exposées à une atmosphère oxydante et dont la température reste inférieure à 950°C.

### ETAT DE LA TECHNIQUE

En général, les anodes et les dalles de bordure d'une cuve d'électrolyse d'aluminium ne sont pas totalement protégées contre l'oxydation. Dans les cuves à piquage ponctuel, les anodes ne sont protégées que par une "couche de couverture" pulvérulente, constituée de poudre d'alumine et de bain solidifié broyé, plus ou moins épaisse et perméable à l'air. Les dalles de bordure sont imprégnées de produits retardants efficaces à moins de 600°C.

En ce qui concerne les anodes, on constate que c'est plus particulièrement au niveau des trous de coulée et des trous d'alimentation en alumine, c'est-à-dire aux endroits où la "couche de couverture" est nettement moins épaisse, voire inexistante, que la protection fait le plus défaut. En ce qui concerne les dalles de bordure, on constate que la protection anti-oxydation devient un problème important pour des cuves de plus de 200 000 ampères.

On peut estimer à une soixantaine de kilogrammes par tonne d'aluminium produite la quantité de carbone consommée inutilement c'est-à-dire en dehors de l'incontournable réaction de dépolarisation spécifique de l'électrolyse. Cette surconsommation est due pour moitié à la carboxyréactivité de l'anode dans le bain de sel fondu et pour l'autre moitié à la combustion des parties non immergées des faces de l'anode. On voit qu'ainsi une trentaine de kilogrammes du carbone des anodes pourrait être économisée par tonne d'aluminium produite si ces anodes étaient plus efficacement protégées contre l'oxydation. Au delà de l'économie de matière, le gain se traduit avantageusement par une diminution du nombre des interventions dans la cuve, due à l'allongement de la durée de vie des éléments carbonés ainsi protégés.

Il est bien connu d'employer des revêtements pour protéger des surfaces carbonées mais ces revêtements sont mal adaptés au problème posé, car ils sont généralement destinés à être utilisés à plus haute température, coûteux à mettre en oeuvre et polluants.

Ainsi, la demande de brevet WO-A-93/20026 révèle un revêtement protégeant l'ensemble des éléments de cuve, cathodes comprises, contre la corrosion dans le bain de sel et l'oxydation à chaud. Mais son application impose une phase de séchage puis de frittage particulièrement coûteuse et difficile à mettre en oeuvre en raison du poids et de la taille des anodes. D'autre part les nombreux éléments contenus dans ce revêtement (borures, carbures, silice colloïdale, etc.) présentent l'inconvénient de polluer l'aluminium produit par l'intermédiaire du bain de sel et des "mégots" d'anode recyclés. Le recyclage du bain et des mégots étant un facteur déterminant dans le rendement économique de l'électrolyse, une solution qui condamne ce dernier perd beaucoup de son intérêt.

Par ailleurs, la demande EP-A-0 269 534 revendique un revêtement protégeant les rondins d'anodes et la partie émergente des anodes utilisées dans les cuves de production d'aluminium par électrolyse d'alumine dissoute dans de la cryolithe fondue selon le procédé Hall-Héroult. On s'aperçoit que le revêtement selon EP-A-0 269 534 joue bien son rôle protecteur sur le scellement en fonte des anodes mais ne protège pas efficacement le carbone des anodes contre l'oxydation, notamment dans les zones plus proches du bain où la température dépasse 550°C.

La demande EP-A-0 489 667 décrit des revêtements et garnissages d'accessoires de fonderie de l'aluminium résistant à l'attaque chimique des alliages d'aluminium très corrosifs, telles que l'aluminium-lithium à l'état liquide à 750°C. Ces revêtements et garnissages sont obtenus à partir d'un mélange d'agrégats réfractaires et d'un liant liquide alcalin constitué d'un mélange en milieu aqueux de polymères minéraux à base de polysilicate et d'un polymère minéral comportant des groupements sialates.

Enfin, d'autres solutions, telles que celle de la demande EP-A-0 609 160, visent des protections stables à une température nettement supérieure à 950°C. Elles imposent un traitement de vitrification à 600°C-700°C qui nécessite une mise en oeuvre difficile et coûteuse, notamment en raison du volume et du poids des anodes à traiter.

Il reste donc à trouver un revêtement peu coûteux qui protège contre l'oxydation les faces de produits carbonés jusqu'à 950°C, température habituelle relevée au-dessus du bain de sel fondu d'une cuve d'électrolyse de l'aluminium. Ce revêtement ne doit par ailleurs pas polluer le métal produit.

### DESCRIPTION DE L'INVENTION:

Nous désignerons par la suite " barbotine ", un ensemble de composants qui, après mélange, constituent une suspension de particules micrométriques dans un solvant aqueux, destiné à être déposé sur une surface à protéger. Jusqu'au séchage, la structure de cette barbotine évolue de telle sorte que la couche déposée devient un revêtement de la surface à protéger.

Un premier objet de l'invention est l'utilisation d'un géopolymère entrant dans la composition d'une barbotine employée pour un revêtement protégeant la surface de produits carbonés exposée à un milieu chaud et oxydant, tels que les parties non immergées dans le bain de sel fondu des anodes et des dalles de bordure des cuves d'électrolyse de l'aluminium et plus généralement les parties non immergées d'éléments réfractaires carbonés utilisés dans une électrolyse s'effectuant à moins de 950°C en bain de sel fondu.

Un géopolymère est un liant aluminosilicate réactif obtenu par mélange de deux constituants qui restent inertes s'ils sont pris séparément. Lesdits constituants sont d'une part un durcisseur liquide et d'autre part un polymère minéral, sous forme de poudre, comportant des groupements sialate Mn (-Si-O-Al-0)ₙ, où M désigne des cations alcalins ou alcalino-terreux tels que Na⁺, K⁺, Ca⁺⁺. Le durcisseur est une solution aqueuse de polymères minéraux à base de polysilicates très fortement alcaline, ce qui favorise la polycondensation, réaction qui se produit après mélange avec la poudre et qui est une expulsion de l'eau à l'extérieur du réseau cristallin du géopolymère formé.

Parmi les liants aluminosilicates réactifs ( durcisseur liquide + poudre ) entrant dans les compositions revendiquées, on peut citer ceux commercialisés sous la marque déposée Géopolymite®.

De préférence, on choisit des poudres comportant parmi lesdits sialates ceux de la famille des poly(sialate-disiloxo)Mₙ(-Si-O-Al-O-Si-O-Si-O)ₙ.

De manière avantageuse, on vise encore plus précisément ceux de la famille des fluoropoly(sialate-disiloxo), F,Mₙ(-Si-O-Al-O-Si-O-Si-O)ₙ.

La demanderesse a eu en effet la surprise de constater que les géopolymères, et en particulier ceux de la famille des poly(sialate-disiloxo) et surtout de la famille des fluoro-poly(sialatedisiloxo), présentent de remarquables propriétés filmogènes, c'est-à-dire qu'ils facilitent le dépôt du revêtement sous la forme d'une pellicule continue adhérente, protégeant efficacement contre l'oxydation à chaud.

La demanderesse a constaté que le revêtement donne une protection améliorée lorsque le géopolymère, de préférence appartenant à la famille des fluoro-poly(sialate-disiloxo), entre dans la composition de la barbotine dans une proportion supérieure à 60% en poids.

Selon l'invention, les composants de ladite composition se présentent sous deux états différents: un état solide, sous forme de poudre, et comportant au moins la poudre dudit géopolymère et un état liquide, comportant au moins le durcisseur dudit géopolymère.

Ladite poudre et ledit liquide, mélangés en vue de préparer une barbotine, ont des concentrations pondérales telles que la barbotine obtenue est suffisamment fluide pour pouvoir être étalée facilement sur la surface et suffisamment chargée en particules solides pour avoir une bonne consistance et éviter les coulures lors du dépôt. De préférence, la somme des concentrations pondérales des constituants solides est supérieure à 1,2 fois et est inférieure à 2 fois la somme des concentrations pondérales des constituants liquides.

Selon une modalité de l'invention, un ajout d'alumine permet avantageusement de diminuer l'apport en géopolymère, donc le coût du revêtement, les risques de pollution du bain de sel et même les risques, faibles, de faïençage du revêtement. Ce dernier devient par contre inacceptable lorsque l'apport d'alumine est trop important: la teneur en alumine est ainsi limitée à 15 % en poids.

Tout en restant dans le cadre de l'invention, il est possible également d'ajouter un élément réfractaire autre que l'alumine sous forme de poudre. Ledit réfractaire autre que l'alumine appartient de préférence au groupe regroupant les carbures, borures, nitrures, siliciures et oxydes, ainsi que tout mélange de ces divers composants. En ce qui concerne l'électrolyse de l'aluminium, on choisira de préférence ces éléments combinés à l'aluminium ou au silicium- de façon à ne pas polluer le métal produit. Le silicium réagit en effet au contact du bain en donnant un composé gazeux SiF6 qui s'élimine du bain et ne pollue donc pas le métal. Une modalité particulièrement avantageuse de l'invention, indiquée dans l'exemple 2, montre qu'un apport de silice jusqu'à 30% donne de bons résultats.

La demanderesse a aussi observé qu'il pouvait être avantageux d'ajouter de l'eau pour obtenir une viscosité du mélange plus favorable à sa pulvérisation. Ledit ajout d'eau améliore également le pouvoir recouvrant du mélange. Par contre, la proportion de l'eau ainsi ajoutée, dite eau additionnelle, est limitée à 25% en poids pour éviter la formation d'un revêtement poreux non protecteur.

Un avantage de l'invention est la possibilité de déposer directement la barbotine obtenue par le mélange de ladite composition sur la surface à protéger. Une préparation particulière de ladite surface n'est pas indispensable mais, dans le cas des anodes, il est préférable d'enlever, par brossage par exemple, le poussier, c'est-à-dire la poussière de carbone qui reste collée sur leurs faces.

La préparation de la barbotine consiste à mélanger à froid, c'est-à-dire à une température voisine de la température ambiante, les composants de la composition selon l'invention, de préférence avec agitation magnétique. La barbotine ainsi obtenue est ensuite déposée sur la surface à protéger avec des moyens très simples voire rudimentaires, tels que des dépôts locaux effectués manuellement par engobe au pinceau ou par pulvérisation au pistolet. On cherche à recouvrir continûment ladite surface sur une épaisseur donnée. L'épaisseur est ici exprimée en terme de quantité de matière déposée par unité de surface, mesurée après séchage. Elle est comprise entre 40 mg/cm² et 100 mg/cm², et de préférence comprise entre 55 mg/cm² et 65 mg/cm².

Un autre avantage de l'invention est que l'on obtient le revêtement par séchage de ladite barbotine à la température ambiante. Au cours du séchage, le dépôt se durcit par polycondensation, c'est-à-dire par expulsion de l'eau hors du réseau cristallin. Ce durcissement peut être très rapide, de l'ordre d'une heure, à une température voisine de 80°C. Mais il est préférable de laisser durcir pendant une trentaine d'heures à la température ambiante pour ne pas avoir à recourir à des moyens lourds et coûteux de manutention et de chauffage.

Un deuxième objet de l'invention est un produit carboné avec des surfaces protégées par ce revêtement, c'est-à-dire un produit carboné dont la surface exposée à un milieu chaud et oxydant est protégée par un revêtement caractérisé en ce qu'il contient des polysilicates et au moins un polymère minéral alcalin comportant des groupements sialates, tel que les parties non immergées dans le bain de sel fondu des anodes et des dalles de bordure des cuves d'électrolyse de l'aluminium et plus généralement les parties non immergées d'éléments réfractaires carbonés utilisés dans une électrolyse s'effectuant à moins de 950°C en bain de sel fondu.

Selon une modalité de l'invention, ledit revêtement de protection contre l'oxydation contient au moins un polymère minéral de la famille poly(sialate-disiloxo). De manière avantageuse, ledit polymère minéral est de la famille fluoro-poly(sialate-disiloxo).

Selon une modalité de l'invention, ledit revêtement de protection contre l'oxydation contient également de l'alumine et éventuellement un autre composant réfractaire. Ledit autre réfractaire appartient de préférence au groupe regroupant les carbures, borures, nitrures, siliciures et oxydes, ainsi que tout mélange de ces divers composants.

De préférence, ledit revêtement de protection contre l'oxydation à chaud des éléments carbonés recouvre continûment la surface à protéger sur une épaisseur découlant d'un apport de matière par unité de surface compris entre 40 et 100 mg/cm², de préférence compris entre 55 mg/cm² et 65 mg/cm².

Un avantage de l'invention tient en ce que ledit revêtement, composé d'alumine et aluminosilicates, pollue peu le bain de l'électrolyse d'aluminium même après recyclage des bouts d'anode non consommés (les "mégots") et du bain de sel car le silicium, nous l'avons déjà signalé, est éliminé en majeure partie par formation du composé gazeux SiF₆.

Un autre avantage de l'invention tient en ce que les éléments de cuve ainsi revêtus ont une plus grande résistance aux perturbations de fonctionnement de la cuve, ce qui permet de diminuer l'épaisseur de la "couche de couverture", donc de moduler le calorifugeage de la cuve pour assurer le meilleur équilibre thermique souhaité.

Enfin la protection due à ce revêtement améliore globalement la tenue mécanique des anodes et des dalles de bordure, auxquelles s'accroche fréquemment une voûte de bain solidifié. Cette dernière se forme dans la "couche de couverture" mais elle peut se détacher brutalement en raison de la dégradation par oxydation de la partie supérieure des anodes et des dalles de bordure. Les accidents d'exploitation liés à ces effondrements de voûte sont donc moins fréquents et la production est de ce fait moins pénalisée.

Lorsque l'élément de cuve revêtu est une anode de cellule d'électrolyse de l'aluminium, il suffit qu'elle soit revêtue sur sa partie exposée à l'action oxydante de l'atmosphère qui règne au dessus du bain d'électrolyse.

Un avantage de l'invention tient en ce que l'anode ainsi revêtue a une durée de vie prolongée, du fait de la combinaison de deux phénomènes: la moindre oxydation de la surface d'une part et la régularité de la cinétique de consommation d'autre part. Ceci permet de mieux maîtriser les hauteurs d'anode sous bouchon de scellement non consommées et il en résulte une diminution de la hauteur résiduelle sous bouchon du mégot d'anode, qui est une réserve obligatoire destinée à éviter un éventuel contact entre le bain et la fonte ou l'acier du scellement, donc la pollution du bain en fer qui en résulterait. La demanderesse a constaté que des anodes revêtues du revêtement selon l'invention avaient ainsi une durée de vie améliorée de l'ordre de 5%, ce qui diminue avantageusement le nombre des interventions nécessaires pour remplacer une anode.

### EXEMPLES

### EXEMPLE 1:

Plus de 150 échantillons ont été testés pour observer la qualité de la protection anti-oxydation d'une vingtaine de revêtements obtenus à partir de géopolymères. Les compositions ont été obtenues à partir de deux poudres référencées HT600 et HT615 dans la gamme offerte sous la marque GEOPOLYMITE® et appartenant toutes deux à la familles des fluoro-poly(sialate-disiloxo).

Chacune de ces poudres à été mélangée avec le durcisseur liquide référencé GP 70/AN utilisé tel quel ou mélangé à parts égales avec le liquide référencé GP 20/A. Le liquide GP 70/AN est riche en ions K⁺ tandis que le liquide GP 20/A est riche en ions Na⁺. Des charges d'alumine ont été ajoutées dans certains mélanges. Il s'agit d'une alumine "propre", pauvre en phosphore, plus précisément une alumine calcinée de la marque ALTECH® référencée AC34B6. L'analyse granulométrique a donné un diamètre moyen voisin de 5,8 microns. Certaines charges comportent également de la silice.

Toutes les compositions ont été obtenues après mélange et agitation magnétique. Chaque préparation obtenue a été déposée par pulvérisation sous pression d'air sur un échantillon de carbone sur une épaisseur variant de 0 à 100 mg/cm2; les échantillons, après séchage, ont été exposés 16 heures à différentes températures dans une atmosphère oxydante (air statique).

La qualité du revêtement a été évaluée en fonction de deux critères:
1) sa tendance au faïençage, avant et après l'exposition en atmosphère chaude oxydante.
   Une appréciation visuelle de la surface est traduite par une note allant de 0 (pas de faïençage) à 10 (faïençage très important). Les résultats donnant des notes allant de 0 à 6 sont jugés acceptables.
2) la résistance à l'oxydation de la surface qu'il recouvre.
   Les échantillons ont été exposés à l'air libre statique pendant 16 heures à différentes températures: 500°C, 750°C et 950°C.
   L'oxydation se traduit par une perte en poids par unité de surface. Elle est ainsi exprimée en mg/h/cm2.
   En absence de revêtement, l'oxydation de la surface de la portion d'anode se traduit par une consommation de #80 mg/h/cm² à 500°C, #180 mg/h/cm² à 750°C et #210 mg/h/cm² à 950°C.
   Le tableau 1 révèle des compositions, toutes rapportées à 100 grammes de poudre du géopolymère employé, ayant conduit à des revêtements déposés sur une épaisseur de 100 mg/cm² et qui ont tous protégé efficacement contre l'oxydation à 500°C. Même s'ils se révèlent bons, ce ne sont pas les géopolymères employés "purs", c'est-à-dire sans eau additionnelle ni alumine ni silice, qui donnent les meilleurs résultats. La concentration en alumine est obligatoirement limitée à cause du faïençage. Par contre la silice peut être assez abondante, par exemple dans l'essai n°18 où sa concentration atteint 30%, tout en conférant au revêtement de bonnes propriétés.

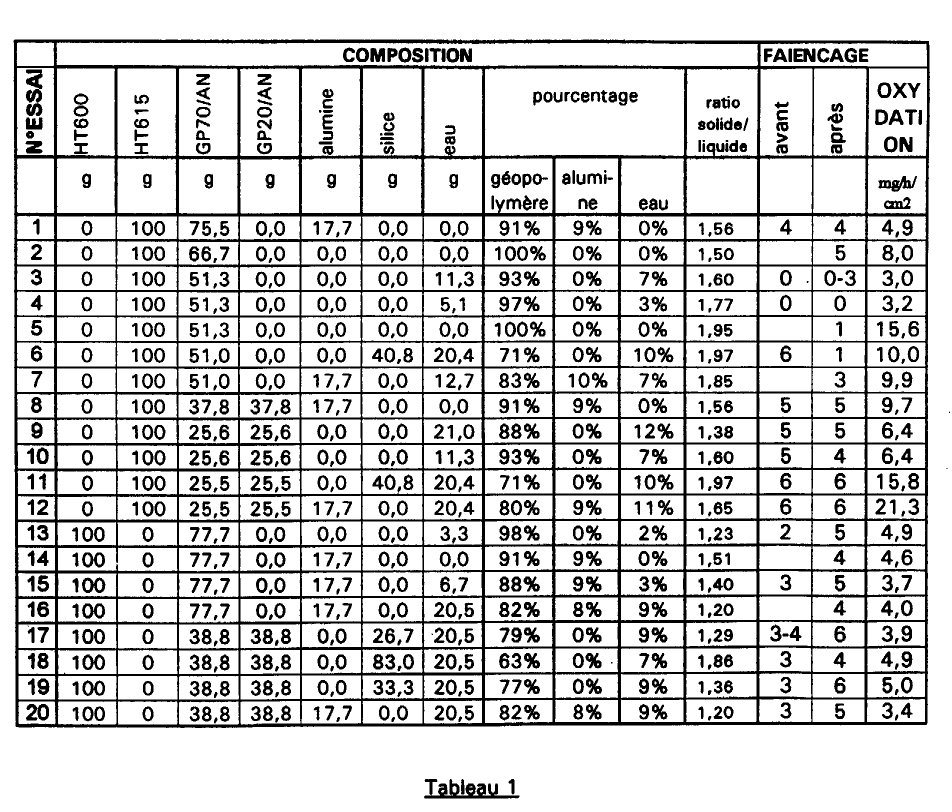

D'autres essais ont montré que l'efficacité de plusieurs de ces revêtements contre l'oxydation était très bonne à partir d'une épaisseur de 60 mg/cm².

D'autres résultats enfin ont été obtenus à des températures plus élevées: on a constaté un oxydation de l'ordre de 18 mg/h/cm² à 750°C, soit dix fois plus faible que celle de la surface non revêtue et une oxydation de l'ordre de 48 mg/h/cm à 950°C soit le quart de la perte de la surface non revêtue constatée à cette température. Dans tous les cas, le revêtement présente une protection efficace contre l'oxydation.

### EXEMPLE 2:

36 anodes revêtues ont été suivies dans le cycle complet du changement de toutes les anodes d'une cuve d'électrolyse.

Le mélange choisi pour le revêtement a été le suivant:

| | |
|---|---|
| eau | 400 g |
| GÉOPOLYMITE® GP 140/A | 1024 g, appartenant à la famille des poly(sialate-disiloxo) |
| GÉOPOLYMITE® GP 20 AN | 1024 g, durcisseur contenant des ions K⁺ |
| GÉOPOLYMITE® HT 600 | 2636 g, appartenant à la famille des fluoro-poly(sialate-disiloxo) |
| alumine ALTECH® AC34B6 | 466g |

La barbotine obtenue après mélange à la température ambiante est pulvérisée avec un pistolet de type "Airless", qui utilise une pression hydraulique et qui permet de revêtir rapidement et correctement les anodes, au rythme de 8 par demi-journée.

L'exploitation de l'essai réside principalement dans la pesée des anodes avant et après utilisation. Un traitement statistique des consommations de carbone établit que le revêtement permet de gagner sur les anodes les plus exposées une dizaine de kilogrammes de carbone par tonne d'aluminium produite.

Des relevés dimensionnels en partie haute des anodes ont montré une diminution de l'ordre de 30% de l'usure des anodes.

Par ailleurs un relevé des teneurs en Si, K et Na a été effectué dans le bain de sel et dans le métal: aucune pollution par le revêtement n'a été constatée.

## Revendications

1. Utilisation d'un géopolymère caractérisée en ce que ledit géopolymère entre dans la composition d'une barbotine employée pour un revêtement protégeant la surface de produits carbonés exposée à un milieu chaud et oxydant, tels que les parties non immergées dans le bain de sel fondu des anodes et des dalles de bordure des cuves d'électrolyse de l'aluminium et plus généralement les parties non immergées d'éléments réfractaires carbonés utilisés dans une électrolyse s'effectuant à moins de 950°C en bain de sel fondu.

2. Utilisation d'un géopolymère selon la revendication 1, caractérisée en ce que ledit géopolymère est de la famille fluoro-poly(sialate-disiloxo) F,Mₙ (-Si-O-Al-O-Si-O-Si-O)ₙ, M désignant des cations alcalins ou alcalins tels que Na⁺, K⁺, Ca⁺⁺.

3. Utilisation d'un géopolymère selon la revendication 1 ou 2, caractérisée en ce que ledit géopolymère entre dans la composition de la barbotine dans une proportion supérieure à 60% en poids.

4. Barbotine destinée à un revêtement protégeant la surface de produits carbonés exposée à un milieu chaud et oxydant, caractérisée en ce qu'un géopolymère entre dans sa composition dans une proportion supérieure à 60% en poids et en ce que la somme des concentrations pondérales des constituant solides est supérieure à 1,2 fois et est inférieure à 2 fois la somme des concentrations pondérales des constituants liquides..

5. Barbotine selon la revendication 4, caractérisée en ce qu'elle comporte jusqu'à 15% en poids d'alumine.

6. Barbotine selon la revendication 4 ou 5, caractérisée en ce qu'elle comporte également, sous forme de poudre, un réfractaire autre que l'alumine.

7. Barbotine selon la revendication 6, caractérisée en ce que ledit réfractaire appartient au groupe regroupant les carbures, borures, nitrures, siliciures et oxydes, ainsi que tout mélange de ces divers composants.

8. Barbotine selon l'une quelconque des revendication 4 à 7, caractérisée en ce qu'elle comporte jusqu'à 25% en poids d'eau additionnelle.

9. Procédé de dépôt d'un revêtement protégeant la surface de produits carbonés exposée à un milieu chaud et oxydant, caractérisé en ce qu'il comporte les étapes suivantes:
a) Préparation de la surface à protéger par brossage du poussier;
b) Mélange à froid et avec agitation magnétique des composants de la barbotine selon les revendications 4 à 8;
c) Dépôt de la barbotine par engobe au pinceau ou par pulvérisation au pistolet sur une épaisseur comprise entre 40 et 100 mg/cm²;
d) Séchage de la barbotine, de préférence à la température ambiante pendant une trentaine d'heures.

10. Produit carboné avec des surfaces protégées par un revêtement, tel qu'un élément réfractaire carboné utilisé dans une électrolyse s'effectuant à moins de 950°C en bain de sel fondu, caractérisé en ce que ledit revêtement contient des polysilicates et au moins un polymère minéral alcalin comportant des groupements sialates.

11. Produit carboné avec des surfaces protégées par un revêtement selon la revendication 10, caractérisé en ce que ledit revêtement contient au moins un polymère minéral alcalin comportant des groupements de la famille poly(sialate-disiloxo).

12. Produit carboné avec des surfaces protégées par un revêtement selon l'une quelconque des revendications 10 à 11, caractérisé en ce que ledit revêtement contient au moins un polymère minéral comportant des groupements de la famille fluoro-poly(sialate-disiloxo).

13. Produit carboné avec des surfaces protégées par un revêtement selon l'une quelconque des revendications 10 à 12, caractérisé en ce que ledit revêtement contient également de l'alumine.

14. Produit carboné avec des surfaces protégées par un revêtement selon l'une quelconque des revendications 10 à 13, caractérisé en ce que ledit revêtement contient un composant réfractaire autre que l'alumine.

15. Produit carboné avec des surfaces protégées par un revêtement selon la revendication 14, caractérisé en ce que ledit composant réfractaire autre que l'alumine appartient au groupe regroupant les carbures, borures, nitrures, siliciures et oxydes, ainsi que tout mélange de ces divers composants.

16. Produit carboné avec des surfaces protégées par un revêtement selon l'une quelconque des revendications 10 à 15, caractérisé en ce que ledit revêtement recouvre la surface à protéger sur une épaisseur comprise entre 40 et 100 mg/cm².

17. Produit carboné avec des surfaces protégées par un revêtement selon l'une des revendications 10 à 16, caractérisé en ce que le produit carboné est une anode de cellule d'électrolyse de l'aluminium et en ce que ledit revêtement couvre au moins la partie de ladite anode exposée à l'action oxydante de l'atmosphère qui règne au dessus du bain d'électrolyse.

## Patentansprüche

1. Verwendung eines Geopolymers, dadurch gekennzeichnet, daß das Geopolymer in der Zusammensetzung eines Breies enthalten ist, der für eine Beschichtung zum Schutz der Oberfläche kohlenstoffhaltiger Produkte verwendet wird, welche Oberfläche einem heißen und oxidierenden Medium ausgesetzt ist, wie die nicht in die Salzschmelze eingetauchten Teile der Anoden und Randsteine der Aluminiumelektrolysezellen und allgemeiner gesagt die nicht eingetauchten Teile kohlenstoffhaltiger feuerfester Elemente, die bei einer Elektrolyse bei einer Temperatur von weniger als 950°C in einer Salzschmelze verwendet werden.

2. Verwendung eines Geopolymers nach Anspruch 1, dadurch gekennzeichnet, daß das Geopolymer zur Familie der Fluorpoly(Sialat-Disiloxo) F,Mₙ (-Si-O-Al-O-Si-O-Si-O)ₙ gehört, wobei M die Alkalikationen oder Alkalimetalle wie Na⁺, K⁺, Ca⁺⁺ bezeichnet.

3. Verwendung eines Geopolymers nach Anspruch 1 oder 2, dadurch gekennzeichnet, daß der Anteil des Geopolymers an der Breimasse mehr als 60 % beträgt.

4. Brei für eine Beschichtung zum Schutz der Oberfläche kohlenstoffhaltiger Produkte, welche Oberfläche einem heißen und oxidierenden Medium ausgesetzt ist, dadurch gekennzeichnet, daß ein Geopolymer zu mehr als 60 Masse-% in seiner Zusammensetzung enthalten ist und daß die Summe der Massenkonzentrationen der festen Bestandteile höher als 1,2 bis kleiner als 2 x höher ist als die Summe der Massenkonzentrationen der flüssigen Bestandteile.

5. Brei nach Anspruch 4, dadurch gekennzeichnet, daß er bis zu 15 Masse-% Aluminiumoxid enthält.

6. Brei nach Anspruch 4 oder 5, dadurch gekennzeichnet, daß er in Form von Pulver auch ein anderes feuerfestes Erzeugnis als Aluminiumoxid enthält.

7. Brei nach Anspruch 6, dadurch gekennzeichnet, daß das feuerfeste Erzeugnis zur Gruppe der Kohlenwasserstoffe, Boride, Nitride, Silizide und Oxide und aller Gemische aus diesen verschiedenen Bestandteilen gehört.

8. Brei nach einem der Ansprüche 4 bis 7, dadurch gekennzeichnet, daß er bis zu 25 Masse-% Zusatzwasser enthält.

9. Verfahren zum Aufbringen einer Beschichtung zum Schutz der Oberfläche kohlenstoffhaltiger Produkte, welche Oberfläche einem heißen und oxidierenden Medium ausgesetzt ist, dadurch gekennzeichnet, daß es folgende Schritte aufweist:
a) Vorbereitung der zu schützenden Oberfläche durch Abbürsten des Kohlenstaubs ;
b) Kaltmischung der Bestandteile des Breies nach Anspruch 4 bis 8 unter magnetischem Rühren ;
c) Aufbringen des Breies in Form von Engobe mit dem Pinsel oder im Spritzverfahren in einer Dicke von 40 bis 100 mg/cm² ;
d) Trocknen des Breies, vorzugweise bei Zimmertemperatur während etwa 30 Stunden.

10. Kohlenstoffhaltiges Produkt mit Flächen, die durch eine Beschichtung geschützt sind, wie ein kohlenstoffhaltiges feuerfestes Element, das bei einer Elektrolyse bei weniger als 950°C in einer Salzschmelze verwendet wird, dadurch gekennzeichnet, daß die Beschichtung Polysilikate und mindestens ein alkalisches Mineralpolymer enthält, das Sialatgruppen aufweist.

11. Kohlenstoffhaltiges Produkt mit Flächen, die durch eine Beschichtung nach Anspruch 10 geschützt sind, dadurch gekennzeichnet, daß die Beschichtung mindestens ein alkalisches Mineralpolymer enthält, das Gruppen der Familie der Poly(Sialat-Disiloxo) aufweist.

12. Kohlenstoffhaltiges Produkt mit Flächen, die durch eine Beschichtung nach einem der Ansprüche 10 bis 11 geschützt sind, dadurch gekennzeichnet, daß die Beschichtung mindestens ein Mineralpolymer enthält, das Gruppen der Familie der Fluorpoly(Sialat-Disiloxo) aufweist.

13. Kohlenstoffhaltiges Produkt mit Flächen, die durch eine Beschichtung nach einem der Ansprüche 10 bis 12 geschützt sind, dadurch gekennzeichnet, daß die Beschichtung auch Aluminiumoxid enthält.

14. Kohlenstoffhaltiges Produkt mit Flächen, die durch eine Beschichtung nach einem der Ansprüche 10 bis 13 geschützt sind, dadurch gekennzeichnet, daß die Beschichtung einen anderen feuerfesten Bestandteil als Aluminiumoxid enthält.

15. Kohlenstoffhaltiges Produkt mit Flächen, die durch eine Beschichtung nach Anspruch 14 geschützt sind, dadurch gekennzeichnet, daß der andere feuerfeste Bestandteil als Aluminiumoxid zur Gruppe der Kohlenwasserstoffe, Boride, Nitride, Silizide und Oxide und aller Gemische aus diesen verschiedenen Bestandteilen gehört.

16. Kohlenstoffhaltiges Produkt mit Flächen, die durch eine Beschichtung nach einem der Ansprüche 10 bis 15 geschützt sind, dadurch gekennzeichnet, daß die Beschichtung die zu schützende Fläche in einer Dicke von 40 bis 100 mg/cm² bedeckt.

17. Kohlenstoffhaltiges Produkt mit Flächen, die durch eine Beschichtung nach einem der Ansprüche 10 bis 16 geschützt sind, dadurch gekennzeichnet, daß das kohlenstoffhaltige Produkt eine Anode einer Aluminiumelektrolysezelle ist und daß die Beschichtung mindestens den Teil der Anode bedeckt, der der oxidierenden Wirkung der Atmosphäre ausgesetzt ist, die über dem Elektrolyten herrscht.

## Claims

1. Use of a geopolymer characterized in that said geopolymer enters into the composition of a slip used for a coating protecting the surfaces of carbon-containing products exposed to a hot, oxidizing environment such as the parts of anodes not immersed in the molten salt bath and the liners of the aluminium electrolysis cells, and more generally the non-immersed parts of carbon-containing refractory elements used in electrolysis conducted below 950°C in a molten salt bath.

2. Use of a geopolymer according to claim 1, characterized in that said geopolymer is in the fluoropoly (sialate-disiloxo) family, F,Mₙ(-Si-O-Al-O-Si-O-Si-O)ₙ , where M designates alkaline or alkaline cations such as Na⁺, K⁺, and Ca⁺⁺.

3. Use of a geopolymer according to claim 1 or 2, characterized by said geopolymer entering into the composition of the slip in a proportion greater than 60 wt. %.

4. Slip intended for a coating protecting the surfaces of carbon-containing products exposed to a hot, oxidizing environment, characterized in that a geopolymer enters into its composition in a proportion of greater than 60 wt. % and in that the sum of the weight concentrations of the solid components is greater than 1.2 times and less than twice the sum of the weight concentrations of the liquid components.

5. Slip according to claim 4, characterized by including up to 15 wt. % alumina.

6. Slip according to claim 4 or 5, characterized by also containing, in the powder form, a refractory other than alumina.

7. Slip according to claim 6, characterized by said refractory belonging to the group comprising carbides, borides, nitrides, silicides, and oxides as well as any mixture of these various components.

8. Slip according to any of claims 4 to 7, characterized by including up to 25 wt.% additional water.

9. Process for deposing a coating protecting the surfaces of carbon-containing products exposed to a hot oxidizing environment, characterized by comprising the following steps :
a) Preparation of surface to be protected by brushing off dust ;
b) Cold mixing with magnetic agitation of the components of the slip according claims 4 to 8 ;
c) Depositing the slip by brushing on or spraying with a gun to a thickness of 40 to 100mg/cm² ;
d) Drying the slip, preferably at room temperature, for about thirty hours.

10. Carbon-containing product with surfaces protected by a coating such as a carbon-containing refractory element used in electrolysis conducted at less than 950°C in a molten salt bath, characterized in that said coating contains polysilicates and at least one inorganic alkaline polymer containing sialate groups.

11. Carbon-containing product with surfaces protected by a coating according to claim 10, characterized in that said coating contains at least one inorganic alkaline polymer containing groups in the poly(sialate-disiloxo) family.

12. Carbon-containing product with surfaces protected by a coating according to either of claims 10 to 11, characterized in that said coating contains at least one inorganic polymer containing groups in the fluoropoly (sialate-disiloxo) family.

13. Carbon-containing product with surfaces protected by a coating according to any of claims 10 to 12, characterized in that said coating also contains alumina.

14. Carbon-containing product with surfaces protected by a coating according to any of claims 10 to 13, characterized in that said coating contains a refractory component other than alumina.

15. Carbon-containing product with surfaces protected by a coating according to claim 14, characterized in that said refractory component other than alumina belongs to the group containing carbides, borides, nitrides, silicides, and oxides, as well as any mixture of these various components.

16. Carbon-containing product with surfaces protected by a coating according to any of claims 10 to 15, characterized in that said coating covers the surface to be protected for a thickness of 40 to 100 mg/cm².

17. Carbon-containing product with surfaces protected by a coating according to any of claims 10 to 16, charcterized in that the carbon-containing product is an aluminium electrolysis cell anode and in that said coating coats at least that part of said anode that is exposed to the oxidizing action of the atmosphere prevailing above the electrolysis bath.
